# EUROPÄISCHE PATENTANMELDUNG

(11) **EP 4 790 769 A1**
(43) Veröffentlichungstag der Anmeldung: **12.08.2026**
(21) Anmeldenummer: 26156803.4
(22) Anmeldetag: 06.02.2026
(51) Int. Cl.: H01M 8/0206, H01M 8/026

(54) **BIPOLARPLATTE FÜR EINE BRENNSTOFFZELLE, BRENNSTOFF-ZELLENMODUL FÜR EIN FAHRZEUG UND FAHRZEUG MIT SELBIGEM**

(30) Priorität: 11.02.2025 DE 102025104939
(71) Anmelder: Aerostack GmbH, 72581 Dettingen an der Erms (DE)
(72) Erfinder: HUBERT, Andreas, 72581 Dettingen an der Erms (DE); LÖRINCI, David, 72581 Dettingen an der Erms (DE); QUINTUS, Martin, 72581 Dettingen an der Erms (DE)
(74) Vertreter: LKGLOBAL Partnerschaftsgesellschaft mbB

(57) **Zusammenfassung**

Es werden eine Bipolarplatte (10) für eine Brennstoffzelle, mit einer Anodenplatte (10a), die anodenseitige (A) Flussfeldkanäle (30) für ein Reduktionsgas (F), insbesondere Wasserstoff, ausbildet, und mit einer Kathodenplatte, die kathodenseitige (C) Flussfeldkanäle (30) für ein Oxidationsgas (O), insbesondere Luftsauerstoff, ausbildet, ein Brennstoffzellenmodul (6) mit einer entsprechenden Bipolarplatte (10) für ein Fahrzeug (1) und ein Fahrzeug (1), insbesondere Luftfahrzeug, mit entsprechendem Brennstoffzellenmodul (6) vorgeschlagen, wobei ein Verhältnis einer Anodenkanaltiefe (t30A) der anodenseitigen (A) Flussfeldkanäle (30) zu einer Kathodenkanaltiefe (t30C) der kathodenseitige (C) Flussfeldkanäle (30) 0.7 bis 0.97 beträgt.

## Beschreibung

### Technisches Gebiet

Die vorliegende Offenbarung betrifft eine Bipolarplatte für eine Brennstoffzelle, ein Brennstoffzellenmodul für ein Fahrzeug, insbesondere Luftfahrzeug, und ein Fahrzeug, insbesondere Luftfahrzeug.

### Technischer Hintergrund

Fahrzeuge mit Brennstoffzellen und entsprechenden Brennstoffzellenmodulen oder -stapeln sind aus dem Stand der Technik bekannt. Ein zentrales Element von Brennstoffzellen, die Wasserstoff als Brennstoff verwenden, wie beispielsweise Protonenaustauschmembran-Brennstoffzellen (engl. *Proton Exchange Membrane Fuel Cells* - PEMFC), sind Bipolarplatten mit Gasflusskanälen (sog. Flussfeldkanäle oder auch Flowfield-Kanäle), die einerseits den Brennstoff als Reduktionsmittel und andererseits in der Regel Luftsauerstoff als Oxidationsmittel über eine Gasdiffusionslage (engl. *Gas Diffusion Layer -* GDL) zu einer Anode bzw. Kathode der Brennstoffzelle führen. Zwischen Anode und Kathode ist eine protonenleitende Membran angeordnet, durch die hindurch aus dem Wasserstoff gewonnene Protonen von Anode zu Kathode wandern, um mittels davon abgeschiedener Elektronen ein nutzbares elektrisches Potential bereitzustellen. Dieser Aufbau einer Brennstoffzelle mit Bipolarplatten, Gasdiffusionslage und protonenleitender Membran wird in Stapelform wiederholt, um besagte Brennstoffzellenmodule bzw. -stapel bereitzustellen.

DE 10 2015 207 455 A1 beispielsweise betrifft eine Bipolarplatte für eine Brennstoffzelle umfassend eine erste Halbplatte mit einer ersten Dicke und eine zweite Halbplatte mit einer zweiten Dicke, wobei die erste Halbplatte und die zweite Halbplatte mit jeweils einer ihrer Flachseiten zueinander angeordnet sind und die erste Halbplatte auf ihrer Außenseite ein erstes Flussfeld (22) für ein erstes Betriebsmedium ausbildet und die zweite Halbplatte auf ihrer Außenseite ein zweites Flussfeld für ein zweites Betriebsmedium ausbildet. Es ist vorgesehen, dass die erste Dicke der ersten Halbplatte zumindest abschnittsweise und im Durchschnitt geringer ist als die zweite Dicke der zweiten Halbplatte.

DE 10 2013 208 450 A1 betrifft eine Bipolarplatte, eine Brennstoffzelllage, einen Brennstoffzellenstapel und ein Kraftfahrzeug. Es ist vorgesehen, dass eine Bipolarplatte für eine Brennstoffzelle zwei Blechlagen umfasst, wobei jede der zwei Blechlagen im Querschnitt je eine periodische Struktur mit Erhebungen und Vertiefungen mit einer selben Periodenlänge aufweist. Die Bipolarplatte ist dadurch gekennzeichnet, dass ein Verhältnis eines Ausmaßes der Erhebungen der einen Blechlage zu einem Ausmaß der Erhebungen der anderen Blechlage so gewählt ist, dass sich die Vertiefungen der einen Blechlage in den Vertiefungen der anderen Blechlage so anordnen lassen, dass zwischen den Erhebungen der Blechlagen Kanäle entstehen. Sind die Erhebungen der einen in den Erhebungen der anderen Blechlage anordnet, entstehen so Kanäle für Temperiermittel. Die Reaktanten fließen durch die Erhebungen der einen und die Vertiefungen der anderen Blechlage.

Auch für Luftfahrzeuge werden derzeit alternative Antriebe auf Wasserstoffbasis entwickelt, um fossile Brennstoffe zu ersetzen und deren Auswirkungen auf die Umwelt zu vermeiden. Brennstoffzellen in Flugzeugen können Wasserstoff für ihren Antrieb und zur Stromerzeugung und Hilfsturbinen (engl. *Auxiliary Power Units* - APUs) ersetzen. Insbesondere in der Verwendung von Wasserstoff wird ein Weg zu einer umweltfreundlichen und nachhaltigen Luftfahrt gesehen, weil dadurch eine Freisetzung von Kohlendioxid oder andere kohlenwasserstoffbezogene Emissionen vermieden werden können.

EP 4 177 991 B1 befasst sich mit einer Bipolarplatte für eine Brennstoffzelle zur Erzeugung von elektrischem Strom gezeigt. Die Bipolarplatte weist einen Bipolarplattenkörper mit einer ersten Oberfläche, wobei der Bipolarplattenkörper eingerichtet ist über die erste Oberfläche mit einer Elektrode in Kontakt zu stehen. Der Bipolarplattenkörper weist auf der ersten Oberfläche mindestens einen Gasströmungskanal auf, wobei der Gasströmungskanal eine erste Gasströmungskanalseitenwand und eine gegenüberliegende zweite Gasströmungskanalseitenwand definiert, und wobei der Gasströmungskanal entlang einer ersten Richtung verläuft und dafür vorgesehen ist, die Elektrode dem Reaktanten auszusetzen. Die Bipolarplatte, weist ferner mindestens einen elektrischen Leiter auf, wobei der mindestens eine elektrische Leiter eingerichtet ist, innerhalb des Bipolarplattenkörpers hinter der ersten Gasströmungskanalseitenwand und/oder der zweiten Gasströmungskanalseitenwand zumindest teilweise parallel zu der ersten Richtung zu verlaufen, derart, dass bei einer an den elektrischen Leiter angelegten Spannung der elektrische Leiter ein elektromagnetisches Feld ausbildet, wobei das elektromagnetisches Feld dafür vorgesehen ist, den Reaktant zumindest teilweise in Richtung der Elektrode zu beschleunigen.

DE 10 2019 108 160 A1 beschreibt eine Bipolarplatte zur Verwendung in einem Brennstoffzellenstapel, aufweisend eine erste Begrenzungsfläche und eine hierzu parallel angeordnete zweite Begrenzungsfläche, wobei die Begrenzungsflächen in einem Abstand zueinander angeordnet sind und einen Zwischenraum definieren, wobei die Bipolarplatte mindestens einen Brennstoffzellenabschnitt mit einem in den Zwischenraum ragende Vertiefungen aufweisenden Strömungsfeld für einen direkten Kontakt mit einer Brennstoffzelle aufweist, sowie mindestens einen sich entlang der Begrenzungsflächen hiervon erstreckenden Kühlabschnitt, wobei mindestens eine Heatpipe in dem Zwischenraum angeordnet ist und sich zur Wärmeübertragung vom Brennstoffzellenabschnitt in den Kühlabschnitt erstreckt.

Eine bevorzugt hohe gravimetrische Leistungsdichte des gesamten Brennstoffzellenstapels erfordert seine Gewichtsbegrenzung und somit auch die seiner Komponenten. Eine Reduktion des Gewichtes der Bipolarplatte führt dafür verwendete Materialien oft an seine physikalischen Grenzen. Große Herausforderungen bei der Gewichtsreduktion liegen im Erhalt der mechanischen Stabilität der Bipolarplatte innerhalb der Stapelbaugruppe, beispielsweise in dem für die Bipolarplatte verwendete Titanlegierungen während der Umformung an ihre Dehnungsgrenzen gebracht werden.

Eine Möglichkeit zur Gewichtsreduktion bei Bipolarplatten liegt in der Verwendung abgestufter Plattendicken für ihre Anoden- und Kathodenplatte. Die Anodenplatte steht in Kontakt mit Wasserstoff, während die Kathodenplatte in Kontakt mit Luft steht, die entlang an den Platten ausgeformten sogenannten Flussfeldkanälen strömen. Zu einer Baugruppe zusammengeschweißt bilden die Anoden- und Kathodenplatte Kühlmittelkanäle zwischen sich.

Aufgrund der physikalischen Eigenschaften der jeweiligen Reaktionsgase ist ein zulässiger Druckabfall in den anodenseitigen Flussfeldkanälen höher als in den kathodenseitigen Flussfeldkanälen. Daher können die anodenseitigen Flussfeldkanäle einen geringen Querschnitt aufweise als die kathodenseitigen Flussfeldkanäle. Wenn das gleiche Material für Anoden- und Kathodenplatte verwendet wird, dann kann ein dünneres Rohmaterial für die Anodenplatte verwendet werden als für die Kathodenplatte.

Bei aus dem Stand der Technik bekannten Bipolarplatten besteht also einerseits Verbesserungspotential bei der Gewichtseinsparung. Andererseits kann es bei der Gewichtseinsparung zu Stabilitätsproblemen kommen, insbesondere indem jeweiliges Material bei der Ausformung der Flussfeldkanäle an seine Dehnungsgrenzen gelangen und dadurch reißen bzw. lokale Schwachstellen in Bereichen entstehen können, wo es zu dünn ist. Letztere kann zu Problemen sowohl bei der Fertigung als auch im Betrieb von Brennstoffzellenstapeln führen.

### Beschreibung

Es kann als Aufgabe betrachtet werden, bei der Herstellung von Bipolarplatten bzw. diese umfassenden Brennstoffzellenmodulen Gewicht zu sparen, ohne dabei ihre mechanische Stabilität zu beeinträchtigen. Insbesondere kann es als Aufgabe betrachtet werden, eine Balance zwischen Dicke und Stabilität der Bipolarplatten bei möglichst hoher gravimetrischer Leistungsdichte der Brennstoffzellenmodule bereitzustellen. Diese Aufgabe wird durch den Gegenstand des unabhängigen Anspruchs 1 sowie der nebengeordneten Ansprüche 9 und 10 gelöst.

Weitere Ausführungsformen ergeben sich aus den abhängigen Ansprüchen sowie aus der folgenden Beschreibung. Dabei in Bezug auf Verfahren beschriebenen Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für eine Bereitstellungs- bzw. Herstellungsvorrichtung sowie Computerprogramme zu deren Steuerung. Insbesondere können Verfahrensschritte und damit zusammenhängend erwähnte Komponenten als Funktionen der Bereitstellungs- bzw. Herstellungsvorrichtung sowie entsprechenden Computerprogramme implementiert sein und beliebige Funktionen der Herstellungsvorrichtung können als Verfahrensschritte implementiert werden.

Insbesondere wird die Aufgabe gelöst durch eine Bipolarplatte für eine Brennstoffzelle, mit einer Anodenplatte, die anodenseitige Flussfeldkanäle für ein Reduktionsgas, insbesondere Wasserstoff, ausbildet, und mit einer Kathodenplatte, die kathodenseitige Flussfeldkanäle für ein Oxidationsgas, insbesondere Luftsauerstoff, ausbildet, wobei ein Verhältnis einer Anodenkanaltiefe der anodenseitigen Flussfeldkanäle zu einer Kathodenkanaltiefe der kathodenseitige Flussfeldkanäle 0.7 bis 0.97 beträgt.

Bei einem Brennstoffzellenmodul für ein Fahrzeug, insbesondere Luftfahrzeug, wird die Aufgabe dadurch gelöst, dass das Brennstoffzellenmodul wenigstens eine Bipolarplatte bzw. ein Brennstoffzellenelement mit wenigstens einer solchen Bipolarplatte umfasst. die Vorrichtung dazu eingerichtet ist, ein entsprechendes Verfahren auszuführen.

Bei Fahrzeug, insbesondere Luftfahrzeug, wird die Aufgabe dadurch gelöst, dass das Fahrzeug wenigstes ein entsprechendes Brennstoffzellenmodul umfasst.

Die anodenseitigen Flussfeldkanäle haben also eine geringere Anodenkanaltiefe als die Kathodenkanaltiefe der kathodenseitigen Flussfeldkanäle. Dies schafft zusätzliche Freiheitsgrade bei der Gestaltung des Anoden-Strömungsfeldes, was eine Verringerung der Metallumformung ermöglicht, wodurch wiederum eine akzeptable Verringerung der Bruchdehnung des Materials in Kauf genommen werden kann.

Die vorgeschlagene Lösung bietet eine vorteilhafte Balance zwischen Dicke und Stabilität der Bipolarplatten bei möglichst hoher gravimetrischer Leistungsdichte der Brennstoffzellenmodule bereitstellen. Darauf basierend kann wiederum eingespart Material und somit Gewicht reduziert werden. Die Lösung hat also eine Vielzahl von Vorteilen gegenüber dem Stand der Technik, indem sie die Fertigung von Brennstoffzellenmodulen mit sehr hoher gravimetrischer Leistungsdichte mit zufriedenstellender Betriebsstabilität ermöglicht.

Gemäß einer Ausführungsform kann vorgesehen sein, dass Bipolarplatte nach Anspruch 1, dadurch gekennzeichnet, dass die Anodenkanaltiefe zwischen 0,2 und 0,38 mm, vorzugsweise zwischen 0,23 und 0,35 mm, höchst vorzugsweise zwischen 0,26 bis 0,32 mm beträgt. Beispielsweise kann die Anodenkanaltiefe 0.3 mm betragen. Dies hilft weiter dabei, eine vorteilhafte Balance zwischen Dicke und Stabilität der Bipolarplatten bei möglichst hoher gravimetrischer Leistungsdichte der Brennstoffzellenmodule bereitstellen.

Gemäß einer Ausführungsform kann vorgesehen sein, dass eine anodenseitige Kanalbreite der anodenseitigen Flussfeldkanäle zwischen 0,6 und 0,75 mm, vorzugsweise zwischen 0,62 und 0,72 mm, höchst vorzugsweise zwischen 0,67 und 0,68 mm beträgt. Beispielsweise kann ein Verhältnis von anodenseitiger Kanaltiefe zu Kanalbreite ca. 0,4 bis 0,46, vorzugsweise 0, 42 bis 0,44, höchst vorzugsweise ca. 0.43 betragen. Somit lässt sich die Balance zwischen Dicke und Stabilität der Bipolarplatten bei möglichst hoher gravimetrischer Leistungsdichte der Brennstoffzellenmodule weiter verbessern.

Gemäß einer Ausführungsform kann vorgesehen sein, dass eine anodenseitige Materialstärke der Anodenplatte wenigstens abschnittsweise zwischen 0,04 und weniger als 0,06 mm, vorzugsweise zwischen 0,045 und weniger als 0,06 mm, höchst vorzugsweise zwischen 0,045 und 0,055 mm beträgt. Bei besagten Materialstärken kann es sich um Nominalstärken jeweiligen Blechmaterials vor seiner Umformung handeln. Nach dem Umformen können die besagten Materialstärken insbesondere im Deckenabschnitt und/oder Bodenabschnitt weiterhin bestehen. Zumindest in einem Flankenbereich bzw. im Bereich von Boden- und/oder Deckenflankenübergängen der Flussfeldkanäle können nach dem Umformen geringere Materialstärken vorliegen, wobei eine durch die Umformung bedingte Ausdünnung des Materials ca. 30% der Nominalstärke betragen kann. Beispielsweise lässt sich dazu Titan (Grad 1) mit einer Bruchdehnung von mindestens 40 % in Walz- und 35 % in Querrichtung verwenden. Auf diesem Wege lässt sich Material weiter einsparen und somit Gewicht reduzieren.

Gemäß einer Ausführungsform kann vorgesehen sein, dass die Kathodenkanaltiefe zwischen 0,29 und 0,4 mm, vorzugsweise zwischen 0,32 und 0,37 mm, höchst vorzugsweise zwischen 0,33 bis 0,35 mm beträgt. Beispielsweise kann die Kathodenkanaltiefe 0,34 mm betragen. Auf diesem Wege lässt sich die Balance zwischen Dicke und Stabilität der Bipolarplatten bei möglichst hoher gravimetrischer Leistungsdichte der Brennstoffzellenmodule weiter verbessern.

Gemäß einer Ausführungsform kann vorgesehen sein, dass eine kathodenseitige Kanalbreite der kathodenseitigen Flussfeldkanäle zwischen 0,74 und 0,86 mm, vorzugsweise zwischen 0,76 und 0,82 mm, höchst vorzugsweise zwischen 0,78 und 0,8 mm beträgt. Beispielsweise kann das Verhältnis zwischen kathodenseitiger Kanaltiefe und Kanalbreite zwischen 0,36 und 0,41, vorzugsweise zwischen 0,38 und 0,39, höchst vorzugsweise ca. 0,385 betragen. sich die Balance zwischen Dicke und Stabilität der Bipolarplatten bei möglichst hoher gravimetrischer Leistungsdichte der Brennstoffzellenmodule weiter verbessern.

Gemäß einer Ausführungsform kann vorgesehen sein, dass eine kathodenseitige Materialstärke der Kathodenplatte wenigstens abschnittsweise zwischen 0,04 und weniger als 0,07 mm, vorzugsweise zwischen 0,05 und weniger als 0,07 mm, höchst vorzugsweise zwischen 0,05 und 0,06 mm beträgt. Bei besagten Materialstärken kann es sich um Nominalstärken jeweiligen Blechmaterials vor seiner Umformung handeln. Nach dem Umformen können die besagten Materialstärken insbesondere im Deckenabschnitt und/oder Bodenabschnitt weiterhin bestehen. Zumindest in einem Flankenbereich bzw. im Bereich von Boden- und/oder Deckenflankenübergängen der Flussfeldkanäle können nach dem Umformen geringere Materialstärken vorliegen, wobei eine durch die Umformung bedingte Ausdünnung des Materials ca. 30% der Nominalstärke betragen kann. Beispielsweise lässt sich dazu Titan (Grad 1) mit einer Bruchdehnung von mindestens 40 % in Walz- und 35 % in Querrichtung verwenden. Dies ermöglicht weiter, möglichst viel Material einsparen und somit Gewicht zu reduzieren.

Gemäß einer Ausführungsform kann vorgesehen sein, dass Böden der anodenseitige Flussfeldkanäle und der kathodenseitigen Flussfeldkanäle mit Ihren jeweiligen Rücken einander gegenüberliegend angeordnet sind. Die Flussfeldkanäle können als Vertiefungen bzw. Sicken ausgeformt sein. Die Vertiefungen bzw. Sicken können entgegengesetzt zueinander angeordnet sein. Auf diesem Wege kann zum einen eine besonders vorteilhafte mechanische Stabilität der Bipolarplatte bereitgestellt werden.

So können die relativ weit voneinander beabstandeten Außenflächen sowie den symmetrischen Aufbau der Bipolarplatte um eine im Bereich der Kontaktflächen der beiden Platten liegenden Mittellinie auf die Bipolarplatte einwirkende Biegekräfte und Momente aufnehmen, was sowohl die Fertigung der Bipolarplatte erleichtert als auch ihre Stabilität im Betrieb erhöht. Die aneinander liegenden Rücken der Flussfeldkanäle können unter minimalen mit Materialaufwand stabil miteinander verbunden werden. Zum anderen erlauben die relativ großen zwischen den beiden Platten gebildeten Kühlkanäle eine relativ hohe Kühlleistung und damit Leistungsdichte.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Draufsicht eines Ausführungsbeispiels eines Fahrzeugs in Form eines Luftfahrzeugs;
- Fig. 2: eine schematische Vorderansicht eines Brennstoffzellenmoduls des in Fig. 1 gezeigten Fahrzeugs;
- Fig. 3: eine schematische Perspektivansicht einer Bipolarplatte des Brennstoffzellenmoduls;
- Fig. 4: eine schematische Perspektivansicht eines Details III der in Fig. 3 dargestellten Bipolarplatte, die entlang einer in Fig. eingezeichneten Schnittlinie A-A angeschnitten ist; und
- Fig. 5: eine schematische Querschnittsansicht der Bipolarplatte entlang der in Fig. 2 dargestellten Schnittlinie A-A.

### Detaillierte Beschreibung

Die folgende detaillierte Beschreibung ist lediglich beispielhafter Natur und soll die Erfindung und deren Verwendungsmöglichkeiten nicht einschränken. Darüber hinaus besteht keine Absicht, sich an im vorstehenden Hintergrund oder in folgender detaillierter Beschreibung Dargelegtes zu binden. Die Darstellungen und Abbildungen in den Zeichnungen sind schematisch und nicht maßstabsgetreu. Gleiche Elemente sind Regel gleich bezeichnet und mit gleichen Bezugszeichen versehen. Ein verbessertes Verständnis des beschriebenen Gegenstands kann durch eine Zusammenschau der Abbildungen und ihrer detaillierten Beschreibung erlangt werden.

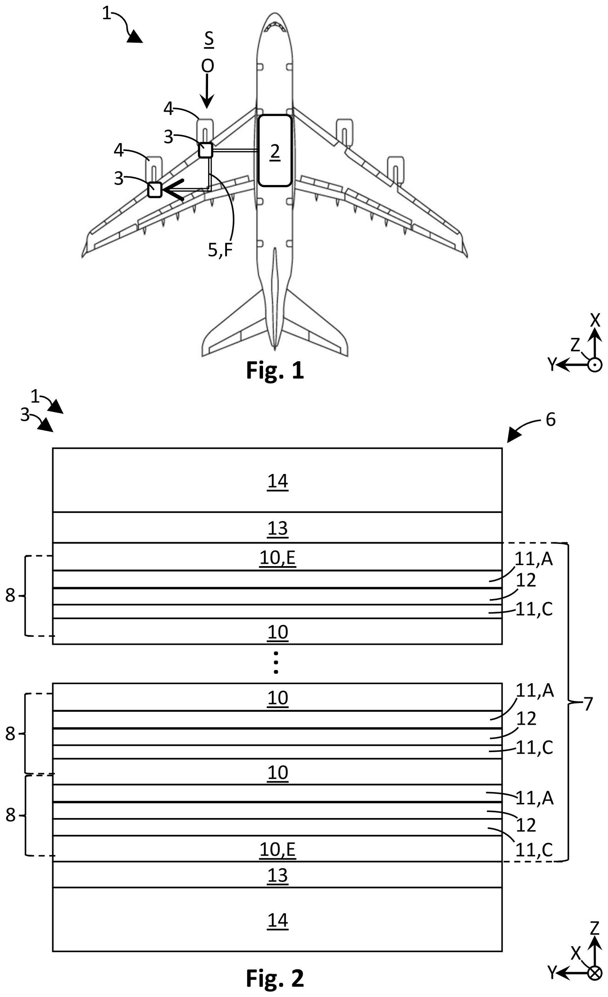

Fig. 1 zeigt eine schematische Draufsicht eines Ausführungsbeispiels eines Fahrzeugs 1 in Form eines Luftfahrzeugs. Das Fahrzeug 1 umfasst ein Brennstoffreservoir 2, Brennstoffzellenanordnungen 3 und Antriebseinheiten 4. Vom Brennstoffreservoir 2, beispielsweise einem Tank, wird ein Reduktionsgas F bzw. Brennstoff, wie beispielsweise Wasserstoff, über Gasleitungen 5 zu den Brennstoffzellenanordnungen 3 geliefert, die das Reduktionsgas F mit einem Oxidationsgas O, wie beispielsweise aus der das Fahrzeug umgebenden Atmosphäre S entnommener Luft, in elektrische Energie umwandeln, die wiederum den Antriebseinheiten 4 zum Antrieb des Fahrzeugs bereitgestellt wird. Das Luftfahrzeug 1 erstreckt sich in einer Längsrichtung X, Querrichtung Y und Höhenrichtung Z, die gemeinsam ein kartesisches Koordinatensystem aufspannen.

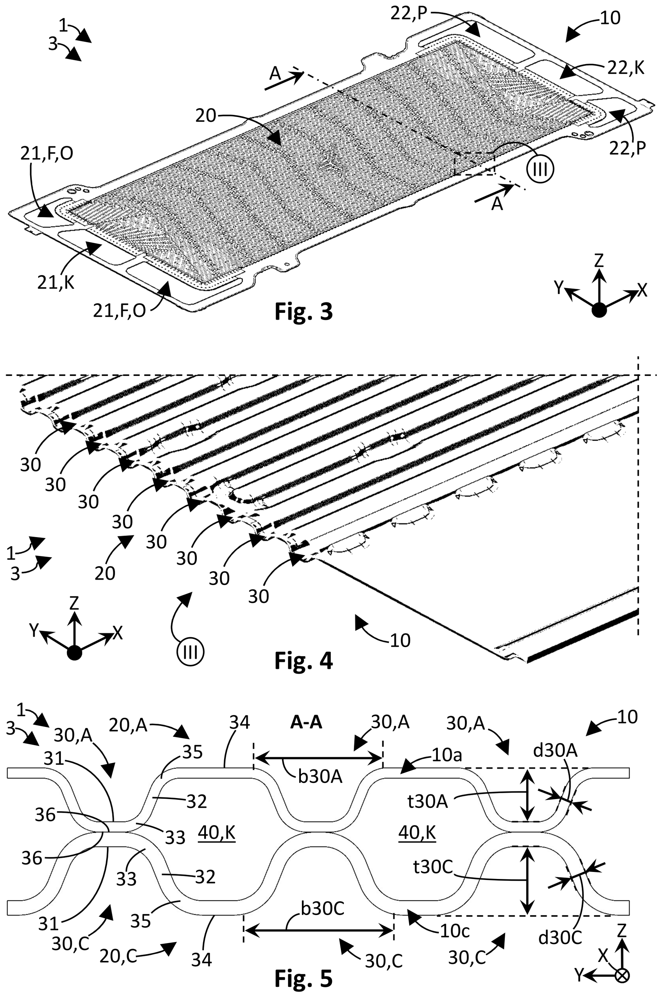

Fig. 2 zeigt eine schematische Vorderansicht eines Brennstoffzellenmoduls 6 des in Fig. 1 gezeigten Fahrzeugs 1. Als Teil der Brennstoffzellenanordnungen 3 umfasst das Brennstoffzellenmodul 6 eine Zellreihengruppierung 7, auch genannt Zellstapel (*Cell Row Assembly -* CRA), die eine Reihe von Brennstoffzellenelementen 8 bzw. einzelne Zellanordnungen umfasst. Jedes Brennstoffzellenelement 8 umfasst eine Bipolarplatte 10 mit einer Anodenplatte 10a und einer Kathodenplatte 10c (siehe Fig. 5), zwei Gasdiffusionslagen 11 und eine Elektrolytschicht 12.

Die Bipolarplatten 10 sind jeweils zwischen den zwei Gasdiffusionslagen 11 aufgenommen, nämlich einer anodenseitigen A Gasdiffusionslage 11 und einer kathodenseitigen C Gasdiffusionslage 11. Zwischen den Gasdiffusionslagen 11 zweier aneinander angrenzender Brennstoffzellenelemente 8 ist die Elektrolytschicht 12, beispielsweise in Form einer Membran mit Katalysator- und lonomerbeschichtung (*Cathalyst Coded Membrane -* CCM) angeordnet. Jeweils eine Abschlussseite E ausbildende Bipolarplatte 10 bzw. Abschlussplatte schließt die Zellreihengruppierung 7 ab.

Stromsammler 13 des Brennstoffzellenmoduls 6 liegen außen an den abschlussseitigen E Bipolarplatten 10 an, um von der Zellreihengruppierung 7 bei der Umwandlung des Reduktionsgas F und des Oxidationsgases O erzeugten elektrischen Strom abzunehmen. An den Stromsammlern 13 liegt wiederum jeweils eine Endplatte 14 des Brennstoffzellenmoduls 6 außen an, welche die Zellreihengruppierung 7 nach außen elektrisch isoliert. Die Zellreihengruppierung 7 umfasst also in der Regel eine den jeweiligen Anforderungen entsprechende Anzahl von Brennstoffzellenelementen 8 mit Bipolarplatten 10, Gasdiffusionslagen 11 und Elektrolytschichten 12, wobei die Anzahl von Zellreihengruppierungen 7 beispielsweise 300 bis 500, beispielsweise ca. 400 betragen kann, um durch entsprechende Spannungsaddition eine benötigte elektrische Gesamtspannung bereitzustellen.

Fig. 3 zeigt eine schematische Perspektivansicht einer der Bipolarplatten 10 des Brennstoffzellenmoduls 6. Die Bipolarplatte 10 besitzt ein Flussfeld 20 mit einlassen 21 für Reduktionsgas F oder Oxidationsgas O bzw. für Kühlmittel K. Des Weiteren besitzt das Flussfeld 20 Auslässe 22 für bei der Reaktion des Reduktionsgases F mit dem Oxidationsgas O gebildete Reaktionsprodukte P bzw. für das Kühlmittel K.

Fig. 4 zeigt eine schematische Perspektivansicht eines Details III der in Fig. 3 dargestellten Bipolarplatte 10, die entlang einer in Fig. eingezeichneten Schnittlinie A-A angeschnitten ist. Hier wird deutlich, dass das Flussfeld 20 eine Reihe von Flussfeldkanälen 30 umfasst, die sich im Wesentlichen parallel zur Längsrichtung X verlaufend entlang der Bipolarplatte 10 erstrecken. Die Flussfeldkanäle 30 sind beispielsweise als Vertiefungen bzw. Sicken in der Bipolarplatte 10 ausgeformt

Fig. 5 zeigt eine schematische Querschnittsansicht der Bipolarplatte 10 entlang der in Fig. 2 dargestellten Schnittlinie A-A. Hier wird deutlich, dass die Bipolarplatte 10 eine andere Anodenplatte 10a und eine Kathodenplatte 10c umfasst, in denen anodenseitige A bzw. kathodenseitige C Flussfeldkanäle 30 ausgeformt sind. Die Flussfettkanäle 30 besitzen jeweils ein Boden 31 und Flanken 32, die über beispielsweise mit einem entsprechenden Radius gerundet ausgeformte Bodenflankenübergänge 33 miteinander verbunden sind.

Des Weiteren sind an der Anodenplatte 10a und der Kathodenplatte 10c jeweils Deckenabschnitte 34 zwischen den Flussbettkanälen 30 ausgeformt, die über beispielsweise mit einem entsprechenden Radius gerundet ausgeformte Deckenflankenübergänge 35 mit den Flanken 32 verbunden sind. Die Anodenplatte 10a und die Kathodenplatte 10c sind an Rücken 36 der jeweiligen Böden 31 miteinander verbunden, beispielsweise zusammengeschweißt, wodurch zwischen den Deckenabschnitten 34 und jeweiligen Flanken 32 sowie Bodenflankenübergängen 33 und Deckenflankenübergängen 35 Kühlmittelkanäle 40 für das Kühlmittel K zwischen der Anodenplatte 10a und der Kathodenplatte 10c gebildet sind.

Die anodenseitigen A Flussfeldkanäle 30 besitzen eine zwischen den jeweiligen Deckenabschnitten 34 gemessene Anodenkanalbreite b30A, die zwischen 0,6 und 0,75 mm, vorzugsweise zwischen 0,62 und 0,72 mm, höchst vorzugsweise zwischen 0,67 und 0,68 mm beträgt, sowie eine zwischen Boden 31 und Oberseite des jeweiligen Deckenabschnitts 34 gemessene Anodenkanaltiefe t30A, die zwischen 0,2 und 0,38 mm, vorzugsweise zwischen 0,23 und 0,35mm, höchst vorzugsweise zwischen 0,26 bis 0,32 mm beträgt. Zumindest im Bereich der Böden 31 und/oder Deckenabschnitte 34 beträgt eine anodenseitige Materialstärke d30A der Anodenplatte 10a wenigstens abschnittsweise zwischen 0,045 und weniger als 0,06 mm, vorzugsweise zwischen 0,045 und weniger als 0,06 mm, höchst vorzugsweise zwischen 0,045 und 0,055 mm. Im Bereich der Flanken 32 sowie Boden- und/oder Deckenflankenübergängen 34, 35 der Flussfeldkanäle 30 können nach dem Umformen geringere Materialstärken vorliegen, wobei eine durch die Umformung bedingte Ausdünnung des Materials ca. 30% der Nominalstärke betragen kann.

Die kathodenseitigen C Flussfeldkanäle 30 besitzen eine zwischen den jeweiligen Deckenabschnitten 34 gemessene Kathodenkanalbreite b30C, die zwischen 0,74 und 0,86 mm, vorzugsweise zwischen 0,76 und 0,82 mm, höchst vorzugsweise zwischen 0,78 und 0,8 mm beträgt, sowie eine zwischen Boden 31 und Oberseite des jeweiligen Deckenabschnitts 34 gemessene Kathodenkanaltiefe t30C, die zwischen 0,29 und 0,4 mm, vorzugsweise zwischen 0,32 und 0,37 mm, höchst vorzugsweise zwischen 0,33 bis 0,35 mm beträgt. Zumindest im Bereich der Böden 31 und/oder Deckenabschnitte 34 beträgt eine kathodenseitige Materialstärke d30C der Kathodenplatte 10c wenigstens abschnittsweise zwischen 0,04 und weniger als 0,7 mm, vorzugsweise zwischen 0,05 und weniger als 0,07 mm, höchst vorzugsweise zwischen 0,05 und 0,06 mm. Im Bereich der Flanken 32 sowie Boden- und/oder Deckenflankenübergängen 34, 35 der Flussfeldkanäle 30 können nach dem Umformen geringere Materialstärken vorliegen, wobei eine durch die Umformung bedingte Ausdünnung des Materials ca. 30% der Nominalstärke betragen kann.

Im vorliegenden Ausführungsbeispiel ist die Bipolarplatte 10 als Schweißkonstruktion aus zwei dünnen Metallblechen, welche die Anodenplatte 10a und die Kathodenplatte 10c ausbilden, wobei im Betrieb der Brennstoffzellenanordnung eine Platte als Anode in Kontakt mit Wasserstoff als Reduktionsgas F und die andere Platte als Kathode in Kontakt mit Luft als Oxidationsgas steht. Die Anodenplatte 10a ist so konstruiert, dass sie die Flussfeldkanäle 30 für Wasserstoffgas ausbildet. Die Kathodenplatte 10c bildet die Flussfeldkanäle 30 für Luft aus.

Ein Verhältnis der Anodenkanaltiefe t30A zur Kathodenkanaltiefe t30B beträgt zwischen 0.7 bis 0.97. Ein Verhältnis zwischen anodenseitiger Kanaltiefe zu Kanalbreite kann ca. 0,4 bis 0,46, vorzugsweise 0, 42 bis 0,44, höchst vorzugsweise ca. 0.43 betragen. Beispielsweise kann das Verhältnis zwischen kathodenseitiger Kanaltiefe und Kanalbreite zwischen 0,36 und 0,41, vorzugsweise zwischen 0,38 und 0,39, höchst vorzugsweise ca. 0,385 betragen.

Beide Platten können an den jeweiligen Rücken 36 so miteinander verschweißt und/oder verklebt sein, dass die Schweißnaht eine Dichtung bildet, die in Kombination mit beiden Platten einen Kühlmittelkanal 40 für das Kühlmedium K im Inneren bildet. Beide Platten sollen die physikalische Trennung der Reaktionsmedien, einen elektrischen Kontakt mit geringem Widerstand und die strukturelle Integrität ermöglichen, um die erforderlichen Strömungsfeldquerschnitte für Wasserstoff, Kühlmittel und Luft aufrechtzuerhalten. Zu Herstellung der Platten kann Titan (Grad 1) mit hoher Bruchdehnung verwendet werden, das sich für das Streck- oder Hydroforming eignet, die bevorzugten Metallumformungstechniken zur Herstellung von Bipolarplattenlagen aus gewalzten Blechspulen.

Die Bruchdehnung beider Platten bzw. entsprechender Bleche sollte nicht unter 35%, idealerweise oberhalb von 40% liegen. Für die Bleche verwendete duktile Werkstoffe sollten im Materialgefüge eine Korngröße von vorzugsweise 20µm oder mehr aufweisen. Die Bleche sollten vorzugsweise in einem Durchlaufverfahren geglüht werden, um Standardabweichungen bei der Bruchdehnung vorzugsweise auf einen niedrigen einstelligen Bereich zu senken, damit die Standardabweichung vorzugsweise nicht mehr als 3% beträgt. Zum Formen der Platten bzw. Bleche verwendete Umformverfahren können mehrstufige ausgestaltet sein das Halbwarmumformen umfassen. In Anbetracht hierin beschriebener Geometrien und genannter Materialstärken erscheinen einstufige Prägeverfahren sowie Verfahren zum Hochdruckumformen der Platten bzw. Bleche eher ungeeignet, insbesondere bei der Verwendung von Titan als Werkstoff.

Alternativ oder zusätzlich kann Stahl und/oder andere metallische Ausgangsmaterialien zur Herstellung der Bipolarplatten 10 verwendet werden. Materialstärken unterhalb von bzw. bis zu 0.055 mm oder dünner, wie beispielsweise unterhalb von 0.04 mm, bis hin zu 0.025 mm, sind möglich. Beim Umformen von Blechen zur Bereitstellung der Bipolarplatten 10 können die Bleche wenigstens abschnittsweise um bis zu 30% ausgedünnt werden, womit eine resultierende Materialstärke in entsprechenden Abschnitten bei ca. 70% der nominalen Blechstärke liegen kann.

Des Weiteren können Radien r der Bögen 35 zwischen Flanken 32 und Böden 34 der Flussfeldkanäle ungefähr zwischen dem 2.5 bis 4.5-fachen der jeweiligen Materialstärke d_{30A}, d_{30C} bzw. Blechstärke betragen. Beispielsweise kann ein Innenradius r₃₅ᵢ der Bögen 35 zwischen dem 2.7 bis 3.1-fachen, vorzugsweise zwischen dem 2.8 bis 3.0-fachen, höchst vorzugsweise um das 2.9-fache der Materialstärke d_{30A}, d_{30C} bzw. Blechstärke betragen. Ein Außenradius r₃₅ₒ der Bögen 35 kann zwischen dem 1.5 bis 4.5-fachen (z.B. bei halbwarm geprägten Blechen), bevorzugt zwischen dem 3.7 bis 4.1-fachen, vorzugsweise zwischen dem 3.8 bis 3.0-fachen, höchst vorzugsweise um das 3.9-fache der Materialstärke d_{30A}, d_{30C} bzw. Blechstärke betragen. So kann beispielsweise bei einer Materialstärke d_{30A}, d_{30C} bzw. Blechstärke von 0.07 mm der Innenradius r₃₅ᵢ etwa 0.2 mm bzw. der Außenradius r₃₅ₒ 0.27 mm betragen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Fahrzeug / Luftfahrzeug
- 2: Brennstoffreservoir / Tank
- 3: Brennstoffzellenanordnung
- 4: Antriebseinheit
- 5: Brennstoffleitung
- 6: Brennstoffzellenmodul
- 7: Zellenreihengruppierung
- 8: Brennstoffzellenelement / Zellanordnung

- 10: Bipolarplatte
- 10a: Anodenplatte
- 10c: Kathodenplatte
- 11: Gasdiffusionslage
- 12: Elektrolytschicht
- 13: Stromsammler
- 14: Endplatte

- 20: Flussfeld
- 21: Einlass
- 22: Auslass

- 30: Flussfeldkanal
- 31: Boden
- 32: Flanke
- 33: Bodenflankenübergang
- 34: Deckenabschnitt
- 35: Deckenflankenübergang
- 36: Rücken

- 40: Kühlmittelkanal

- b_{30A}: Anodenkanalbreite
- d_{30A}: anodenseitige Materialstärke
- t_{30A}: Anodenkanaltiefe
- b_{30C}: Kathodenkanalbreite
- d_{30C}: kathodenseitige Materialstärke
- t_{30C}: Kathodenkanaltiefe

- A: Anodenseite
- C: Kathodenseite
- E: Abschlussseite/Abschlussplatte
- F: Reduktionsgas / Brennstoff
- K: Kühlmittel
- O: Oxidationsgas
- P: Reaktionsprodukt
- S: Atmosphäre/Umgebung
- X: Längsrichtung
- Y: Querrichtung
- Z: Höhenrichtung

## Patentansprüche

1. Bipolarplatte (10) für eine Brennstoffzelle,
mit einer Anodenplatte (10a), die anodenseitige (A) Flussfeldkanäle (30) für ein Reduktionsgas (F), insbesondere Wasserstoff, ausbildet, und
mit einer Kathodenplatte, die kathodenseitige (C) Flussfeldkanäle (30) für ein Oxidationsgas (O), insbesondere Luftsauerstoff, ausbildet,
wobei ein Verhältnis einer Anodenkanaltiefe (t30A) der anodenseitigen (A) Flussfeldkanäle (30) zu einer Kathodenkanaltiefe (t30C) der kathodenseitige (C) Flussfeldkanäle (30) 0.7 bis 0.97 beträgt.

2. Bipolarplatte (10) nach Anspruch 1, **dadurch gekennzeichnet, dass** die Anodenkanaltiefe zwischen 0,2 und 0,38 mm, vorzugsweise zwischen 0,23 und 0,35mm, höchst vorzugsweise zwischen 0,26 bis 0,32 mm beträgt.

3. Bipolarplatte (10) nach Anspruch 1 oder 2, **dadurch gekennzeichnet, dass** eine anodenseitige (A) Kanalbreite (b30a) der anodenseitigen (A) Flussfeldkanäle (30) zwischen 0,6 und 0,75 mm, vorzugsweise zwischen 0,62 und 0,72 mm, höchst vorzugsweise zwischen 0,67 und 0,68 mm beträgt.

4. Bipolarplatte (10) nach wenigstens einem der oben genannten Ansprüche, **dadurch gekennzeichnet, dass** eine anodenseitige (A) Materialstärke (d30A) der Anodenplatte (10a) wenigstens abschnittsweise zwischen 0,04 und weniger als 0,06 mm, vorzugsweise zwischen 0,045 und weniger als 0,06 mm, höchst vorzugsweise zwischen 0,045 und 0,055 mm beträgt.

5. Bipolarplatte (10) nach Anspruch 4, **dadurch gekennzeichnet, dass** die Kathodenkanaltiefe (t30C) zwischen 0,29 und 0,4 mm, vorzugsweise zwischen 0,32 und 0,37 mm, höchst vorzugsweise zwischen 0,33 bis 0,35 mm beträgt.

6. Bipolarplatte (10) nach wenigstens einem der oben genannten Ansprüche, **dadurch gekennzeichnet, dass** eine kathodenseitige (C) Kanalbreite (t30B) der kathodenseitigen (C) Flussfeldkanäle (30) zwischen 0,74 und 0,86 mm, vorzugsweise zwischen 0,76 und 0,82 mm, höchst vorzugsweise zwischen 0,78 und 0,8 mm beträgt.

7. Bipolarplatte (10) nach wenigstens einem der oben genannten Ansprüche, **dadurch gekennzeichnet, dass** eine kathodenseitige (C) Materialstärke der Kathodenplatte (10c) wenigstens abschnittsweise zwischen 0,04 und weniger als 0,07 mm, vorzugsweise zwischen 0,05 und weniger als 0,07 mm, höchst vorzugsweise zwischen 0,05 und 0,06 mm beträgt.

8. Bipolarplatte (10) nach wenigstens einem der oben genannten Ansprüche, dass Böden (31) der anodenseitige (A) Flussfeldkanäle (30) und der kathodenseitigen (C) Flussfeldkanäle (30) mit Ihren jeweiligen Rücken (36) einander gegenüberliegend angeordnet sind.

9. Brennstoffzellenmodul (6) für ein Fahrzeug (1), insbesondere Luftfahrzeug, **dadurch gekennzeichnet, dass** Brennstoffzellenmodul (6) wenigstens eine Bipolarplatte (10) nach wenigstens einem der Ansprüche 1 bis 8 bzw. ein Brennstoffzellenelement (8) mit wenigstens einer solchen Bipolarplatte (10) umfasst.

10. Fahrzeug (1), insbesondere Luftfahrzeug, **gekennzeichnet durch** wenigstens ein Brennstoffzellenmodul (6) nach Anspruch 9.
